Europäisches Patentamt

European Patent Office

Office européen des brevets

(11) Veröffentlichungsnummer: **0 176 018**

**A1**

(12) **EUROPÄISCHE PATENTANMELDUNG**

(21) Anmeldenummer: **85111680.6**

(22) Anmeldetag: **16.09.85**

(51) Int. Cl.⁴: **C 09 D 9/00**

(30) Priorität: 24.09.84 DE 3434985

(43) Veröffentlichungstag der Anmeldung:
02.04.86 Patentblatt 86/14

(84) Benannte Vertragsstaaten:
AT BE CH DE FR GB IT LI NL SE

(71) Anmelder: Henkel Kommanditgesellschaft auf Aktien
Postfach 1100 Henkelstrasse 67
D-4000 Düsseldorf-Holthausen(DE)

(72) Erfinder: Olbrück, Peter
Sinkesbruch 89
D-4030 Ratingen(DE)

(72) Erfinder: Kluth, Hermann
Degerstrasse 48
D-4000 Düsseldorf 1(DE)

(72) Erfinder: Röderhoff, Bernhard
Am Zunder 12
D-4000 Düsseldorf 13(DE)

(72) Erfinder: Dierichs, Wolfgang, Dr.
Im Diepental 11
D-4000 Düsseldorf 13(DE)

(72) Erfinder: Wegner, Jürgen, Dr.
Siegfriedstrasse 21
D-4000 Düsseldorf 11(DE)

(54) **Abbeizschaum.**

(57) Beschrieben wird ein Abbeizmittel auf Basis einer wäßrigen Alkali- und/oder Ammoniumhydroxidlösung mit einem Gehalt an Tensiden, das als standfester Schaum appliziert werden kann. Das Abbeizmittel wird vorzugsweise in Aerosoldosen verpackt und enthält dann als weitere Komponente übliche Treibmittel.

EP 0 176 018 A1

Henkelstraße 67
4000 Düsseldorf, den 2.4.1985

HENKEL KGaA
ZR-FE/Patente
Dr. Wi/Br

P a t e n t a n m e l d u n g

D 7078 EP

"Abbeizschaum"

Die Erfindung betrifft ein stark alkalisches Abbeizmittel mit rasierschaumartiger Konsistenz, das sich
zur Entfernung verseifbarer Farbanstriche auf alkalistabilen Untergründen wie beispielsweise Holz eignet.

Zur Entfernung verseifbarer Lackanstriche werden seit
vielen Jahren stark alkalische Abbeizer eingesetzt, die
als wirksames Prinzip Natronlauge, Kalilauge oder auch
Ammoniumhydroxid enthalten. Da dem Abbeizvorgang eine
chemische Reaktion mit einem Zeitbedarf von Minuten
bis Stunden zugrunde liegt, besteht das Problem bei
der Anwendung dieser Produkte hauptsächlich darin, die
Abbeizlösung lange Zeit mit der zu entferndenden Lackschicht in Kontakt zu halten. In der deutschen Offenlegungsschicht 31 04 546 wird dazu vorgeschlagen, dem
Abbeizer eine hautbildungfördernde Komponente zuzusetzen,
so daß beim Auftragen der wässrigen Zusammensetzung
auf der gestrichenen abzubeizenden Oberfläche eine abziehbare Haut entsteht. In der europäischen Patentanmeldung OO 55886 wird vorgeschlagen, dem Abbeizmittel
ein "Abdeckmittel" beispielsweise ein textiles Flächengebilde zuzugeben, das hinterher mit der abgebeizten
Lackschicht entfernt werden kann. Aufgrund dieser beiden
Arbeitsweisen gelingt es - in Räumen mit ausreichender
Luftfeuchtigkeit - das alkalische Abbeizmittel längere
Zeit in aktiver, das heißt feuchter Form mit der

...

abzubeizenden Lackschicht in Berührung zu halten. Es treten jedoch neue Nachteile auf, die sich insbesondere bei Gegenständen mit verwinkelten Flächen beispielsweise gedrechselten Stäben bemerkbar machen. Die Mittel nach der DE-OS 31 04 546 haben breiartige Konsistenz und müssen mit Spachteln oder Spateln unter vollständiger Oberflächenbedeckung aufgetragen werden. Bei den Mitteln nach der europäischen Offenlegungsschrift OO 55886 muß das textile Abdeckmittel der Oberfläche angepaßt werden, was teilweise nur schwer, das heißt nur unter hohem Materialverbrauch möglich ist.

Aufgabe der Erfindung ist es somit, einen alkalischen Abbeizer zu schaffen, der auf Flächen beliebiger Geometrie und beliebiger Neigung schnell einfach und sauber aufzutragen ist und ohne zu Trocknen oder abzurutschen ausreichende Zeit damit in Kontakt bleibt.

Gegenstand der Erfindung ist somit ein als Schaum applizierbares alkalisches Abbeizmittel auf Basis einer 5 bis 40 gewichtsprozentigen wässrigen Alkali- und/oder Ammoniumhydroxidlösung, dadurch gekennzeichnet, daß es bezogen auf Gesamtzubereitung

1 bis 8 Gewichtsprozent Tenside

O bis 5 Gewichtsprozent Schaumstabilisatoren und/oder Verdickungsmittel

5 bis 30 Gewichtsprozent Treibmittel und gewünschtenfalls 1 bis 10 Gewichtsprozent wassermischbare organische Lösungsmittel enthält.

Insbesondere ist ein treibmittelhaltiger, in einer Aerosoldose konfektionierter Abbeizschaum Gegenstand der Erfindung.

Der erfindungsgemäße Abbeizschaum enthält als alkalisierende Komponente Alkalimetall und/oder Ammonium-

...

0176018
HENKEL KGaA
ZR-FE/Patente

hydroxide. Bevorzugt sind Kalilauge, Natronlauge und/oder Ammoniaklösung. Auch Tetraalkylammoniumhydroxide zum Beispiel Tetraethylammoniumhydroxid oder Tetramethylammoniumhydroxid können eingesetzt werden. Die genannten Alkalisierungsmittel liegen in den Zubereitungen als 5 bis 40 gewichtsprozentige wässrige Lösungen vor. Bevorzugt ist die Verwendung von 10 bis 30 gewichtsprozentigen, insbesondere 15 bis 20 gewichtsprozentigen Lösungen.

Die erfindungsgemäßen Zubereitungen enthalten weiterhin Tenside. Diese dienen einerseits zur Benetzung hydrophober lackierter Oberflächen, andererseits zur Erzeugung eines stabilen Schaumes. Es sind hier alle mit starke  Alkalien verträgliche Tenside geeignet. So können Aniontenside, nichtionische Tenside oder auch Amphotenside verwendet werden. Geeignet sind aber auch Kationtenside. Die Tensidmenge wird der Fachmann nach der angestrebten Schaumstabilität einstellen. So ist es im allgemeinen nicht nötig, mehr als 8 Gewichtsprozent, bezogen auf die Gesamtzubereitung an Tensiden einzusetzen. Andererseits ist bei Tensidmengen unter 1 % die Schaumstabilität meist für längere Arbeitsvorgänge nicht ausreichend. Es werden daher im allgemeinen 1 bis 8 Gewichtsprozent, vielfach jedoch nur 1 bis 6 oder 1 bis 4 Gewichtsprozent Tenside eingesetzt. Günstige Ergebnisse werden im allgemeinen schon mit 1,5 bis 3 Gewichtsprozent erzielt.

Unter Tensiden werden hier ganz allgemein Substanzen verstanden, die neben einem meist aliphatischen Kohlenwasserstoffrest mit 8 bis 26, vorzugsweise 10 bis 22 und insbesondere 12 bis 18 C-Atomen oder einem alkyl-

...

HENKELKGaA
ZR-FE/Patente

aromatischen Rest mit 6 bis 18, vorzugsweise 8 bis 16 aliphatischen C-Atomen. Eine wasserlöslich machende anionische, zwitterionische, kationische oder nichtionische Gruppe aufweisen.

Als anionische Tenside können in den erfindungsgemäßen Abbeizmitteln, Seifen natürlicher oder synthetischer, gesättigteroder ungesättiger Fettsäuren, gegebenenfalls auch Seifen von Harz-oder Naphthensäuren verwendet werden. Weitere einsetzbare synthetische anionische Tenside sind solche vom Typ der Sulfonate, Sulfate oder der synthetischen Carboxylate.

Als Tenside vom Sulfonattyp kommen Alkylbenzolsulfonate ($C_{9-15}$-Alkyl) Gemische aus Alken- und/oder Hydroxyalkan-sulfonaten sowie Disulfonaten, wie man sie beispielsweise aus Monoolefinen mit end- oder innenständiger Doppelbindung durch Sulfonierung mit gasförmigem Schwefeltrioxid und anschließende alkalische oder saure Hydrolyse der Sulfonierungsprodukte erhält, in Betracht. Weiter geeignet sind Alkansulfonate, die aus Alkanen durch Sulfochlorierung oder Sulfoxydation und anschlies-sende Hydrolyse beziehungsweise Neutralisation beziehungs-weise durch Bisulfitaddition an Olefine erhältlich sind. Weitere brauchbare Tenside vom Sulfonattyp sind die $\alpha$-Sulfofettsäuren, die aus $\alpha$-Sulfofettsäureester her-gestellt werden können.

Geeignete Tenside vom Sulfattyp sind Schwefelsäuremonoester primärer Alkohole zum Beispiel von Fettalkoholen, Alkylbenzolen, Alkylphenolen oder deren Umsetzungsprodukten mit Ethylenoxid oder von Kokosalkoholen, Talgfettalkoholen oder Oleylalkohol. Verwendet werden können gleichwohl auch die Schwefelsäuremonoester sekundärer Alkohole zum Beispiel

...

von sekundären Alkoholen, die durch die sogenannte Gerbet-Reaktion aus Fettalkoholen unter Verdoppelung der Anzahl der C-Atome hergestellt werden können. Weitere geeignete Schwefelsäuremonoester können aus Fettsäurealkanolamiden, Fettsäuremonoglyceriden oder aus den Anlagerungsprodukten von 1 bis 10, vorzugsweise 1 bis 4 mol Ethylenoxid oder Propylenoxid an primäre oder sekundäre Fettalkohole oder Alkylphenole erhalten werden.

Weitere geeignete anionische Tenside sind die Fettsäureamide von Aminocarbonsäuren beziehungsweise -sulfonsäuren wie zum Beispiel die Fettsäuresarcoside, -tauride oder -isäthionate.

Eine bevorzugte Klasse anionischer Tenside sind Phosphorsäuremono- und/oder Diester von Fettalkoholen, Alkyphenolen, ethoxylierten Fettalkoholen und/oder ethoxylierten Alkylphenolen (1 bis 10, vorzugsweise 1 bis 4 mol EO pro mol Alkohol). Geeignet sind weiterhin Dodecyldiphenyletherdisulfonate.

Als nichtionische Tenside sind Anlagerungsprodukte von 4 bis 40, vorzugsweise 4 bis 20 mol Ethylenoxid an 1 mol Fettalkohol, Alkylphenol, Fettsäure, Fettamin, Fettsäureamid oder Alkansulfonamid verwendbar. Besonders wichtig sind die Anlagerungsprodukte von 5 bis 16 mol Ethylenoxid an Kokos- oder Talgfettalkohole, an Oleylalkohol oder an sekundäre Alkohole mit 8 bis 18, vorzugsweise 12 bis 18 C-Atomen, sowie an Mono- oder Dialkylphenole mit 6 bis 14 C-Atomen in den Alkylresten. Als nichtionische Tenside sind weiterhin die wasserlös-

. . .

8d 230/438539 3 04 84

lichen, 20 bis 250 Ethylenglykolethergruppen und 10 bis 100 Propylenglykolethergruppen enthaltenden Anlagerungsprodukte von Ethylenoxid an Propylenglykol, Alkylendiamin-polypropylenglykol und Alkylpropylenglykole mit 1 bis 10 C-Atomen in der Alkylkette brauchbar, in denen die Propylenglykolkette als hydrophober Rest fungiert. Bevorzugt sind beispielsweise die Umsetzungsprodukte von Oleyl-cetylalkohol mit 2 oder 5 mol Ethylenoxid.

Das Schaumvermögen der Tenside läßt sich durch Kombination mehrerer Tenside oder mehrerer Tensidtypen steigern. Der Fachmann kann dies in einfacher Weise im Rahmen von Vorversuchen feststellen, bei denen die Lösungen gemischt werden, in einer Meßeinrichtung zur Beobachtung der Schaumhöhe geschüttelt wird und anschließend vermessen werden. Als Schaumstabilisatoren eignen sich vor allem bei Tensiden vom Sulfonat- oder Sulfattyp kapillaraktive Carboxy- oder Sulfobetaine sowie die obenerwähnten nichtionischen Tenside (Niotenside) vom Alkylolamidtyp. Ausserdem sind für diesen Zweck bereits Fettalkohole oder höhere endständige Diole vorgeschlagen worden.

Die erfindungsgemäßen Abbeizer können als Tenside auch amphotere oder zwitterionische Tenside enthalten. Es sind dies Substanzen, die im Molekül sowohl saure Gruppen wie zum Beispiel die Carboxyl- Sulfo- Schwefelsäurehalbester- Phosphono- oder Phosphorsäureteilestergruppen enthalten und andererseits basische Gruppen wie zum Beispiel Amino- Imino oder Ammoniumgruppen aufweisen. Besonders geeignete Tenside aus dieser Gruppe sind die Betaine und die Sulfobetaine. Als Betaine bezeichnet man zwitterionische Verbindungen mit einer 4-fach substituierten quartären Ammoniumgruppe und einer kovalent gebundenen Säuregruppe. Die Verbindungen weisen meist am Stickstoff einen oder höchstens 2 langkettige Reste

...

mit mehr als 8 C-Atomen auf. Die anionische, wasserlöslich machende Säuregruppe ist über einen weiteren
Substituenten, der meist aus einem kurzkettigen, gegebenenfalls eine Doppelbindung oder eine Hydroxylgruppe
aufweisenden aliphatischen Rest besteht mit dem
Ammoniumstickstoff verbunden. Die restlichen Gruppen
sind Alkylreste mit 1 bis 3 Kohlenstoffatomen, die,
wenn sie länger als $C_1$ sind, auch Hydroxylgruppen aufweisen können.

Schließlich können kationische Tenside verwendet werden,
so beispielsweise quartäre Ammoniumsalze, die mindestens
einen langkettigen Rest der Kettenlänge $C_{12}$ und größer
aufweisen. Geeignet sind beispielsweise Trialkylammonium,
Hydroxide oder deren Salze. So ist Lauryltrimethylammoniumchlorid ein geeignetes Kationtensid. Verwendet
werden können auch die analogen Ethyl- und Propyl-Verbindungen.

Die erfindungsgemäßen Abbeizer können weiterhin bis
zu 5 Gewichtsprozent, bezogen auf Gesamtzubereitung,
Schaumstabilisatoren und/oder Verdickungsmittel enthalten. Als Verdickungsmittel sind hier anorganische
wie organische Verdickungsmittel geeignet. Als anorganische Verdickungsmittel können Wassergläser verwendet
werden, wenngleich bekannt ist, daß diese in stark
alkalischen Zubereitungen zu relativ niedermolekularen
Silikaten hydrolysieren. Als organische Verdickungsmittel können alkalistabile hydrophile Polymere eingesetzt werden. So sind beispielsweise Polymere der
Acrylsäure und/oder Methacrylsäure geeignete Verdickungsmittel. Weitere geeignete Verdickungsmittel sind Polysacharide. Eingesetzt werden können beispielsweise

. . .

natürliche Polysacharide wie Xanthan, aber auch Umsetzungsprodukte von Cellulose und Guar. So sind insbesondere Celluloseether geeignete Verdickungsmittel. Beispiele sind Carboxymethylcellulose, Methylcellulose oder Hydroxyethylcellulose.

Die erfindungsgemäßen Abbeizer werden nach einer bevorzugten Ausführungsform in Aerosoldosen verpackt. Dies bietet den Vorteil, daß beim Öffnen des Ventils die Zubereitung in Form eines stabilen Schaumes austritt. Ein weiterer Bestandteil der Zubereitungen sind daher in diesem Falle Treibmittel. Verwendbar sind hier sowohl brennbare als auch nicht brennbare Treibmittel. Unter den nicht brennbaren Treibmitteln sind Fluorkohlenwasserstoffe besonders bevorzugt. So kann beispielsweise Dichlordifluormethan eingesetzt werden. Andererseits können jedoch auch brennbare, niedrigsiedende organische Lösungsmittel verwendet werden. Zu erwähnen sind hier einerseits Ether, wie Dimethylether und andererseits Alkane wie Butan oder Pentan, deren Mischungen oder Isomere. Als weiteres Treibmittel ist Stickstoffsuboxid ($N_2O$, Lachgas) geeignet. Die Treibmittelmenge sollte zwischen 5 und 30 Gewichtsprozent liegen. Günstige Ergebnisse werden jedoch im allgemeinen mit 10 bis 25 und insbesondere mit 10 bis 15 Gewichtsprozent Treibmittel erzielt.

Die erfindungsgemäßen Abbeizschäume können weiterhin 1 bis 10 Gewichtsprozent wassermischbare organische Lösungsmittel enthalten. Dabei hat der Fachmann durch geeignete Vorversuche sicher zu stellen, daß Konsistenz und Beständigkeit der Schäume gewahrt bleiben. Geeignete Lösungsmittel sind beispielsweise monofunktionelle Alkohole der Kettenlänge $C_1$, $C_2$, $C_3$, $C_4$, $C_5$ und $C_6$.

...

**0176018**
HENKEL KGaA
ZR-FE/Patente

Diese können linear, verzweigt oder cyclisch sein. Weiter geeignet sind die funktionellen Alkohole beispielsweise Ethylenglykol, Propylenglykol oder die Isomeren Butandiole. Schließlich sind Monoalkylether der vorgenannten Glykole mit den vorgenannten Alkoholen geeignet.

Nach einer weiteren Ausführungsform der Erfindung werden die Abbeizmittel treibmittelfrei hergestellt. In diesem Falle erfolgt das Verschäumen durch Vermischen mit Treibmittel vor der Anwendung.

Die erfindungsgemäßen Abbeizer werden vor der Anwendung zunächst in Schaumform gebracht. Bevorzugt ist dabei eine rasierschaumartige Konsistenz. Dies kann erreicht werden, in dem das Produkt aus einer unter dem Eigendruck des Treibmittels stehenden Aerosoldose entnommen wird oder durch mechanisches Verschäumen. Der Schaum wird dann auf die zu entfernende Lackschicht aufgetragen und in üblicher Weise einwirken gelassen. Die Schäume sind nicht filmbildend, auch wenn sie Verdickungsmittel enthalten.

Für großflächige Anwendungen geht man von entsprechenden technischen Auftragsvorrichtungen aus, die aus Drucktanks, Dosierpumpen, Mischeinrichtungen und Auslaßventilen geeignete Geometrie bestehen.

...

0176018
HENKEL KGaA
ZR-FE/Patente

Durch die schaumartige Konsistenz des Abbeizers werden zahlreiche Vorteile erreicht. So sind die Abbeizschäume sehr leicht und daher auch an senkrechten Flächen standfest. Verglichen mit breiartigen Zubereitungen sind die Schäume weiterhin sehr materialsparend, was zu verminderten Kosten und Abfallproblemen führt. Dies gilt selbst dann, wenn eine cirka 1 cm dicke Schaumschicht aufgetragen wird. Ein weiterer Vorzug des aus Aerosoldosen entnommenen Schaums liegt darin, daß dieser direkt nach Verlassen der Dose noch weiter expandiert, so daß selbst Vertiefungen und Ritzen der lackierten Fläche benetzt werden.

...

04230/438539 3 11.83

0176018
HENKEL KGaA
ZR-FE/Patente

Beispiel 1

Eine Aerosoldose wurde gefüllt mit:

15 g Kaliumhydroxid

10 g 30 gewichtsprozentige wässrige Lösung eines nicht-
    ionischen Tensids (Anlagerungsprodukt von 5 mol
    Ethylenoxid an 1 mol Talgfettalkohol)

62 g Wasser

12 g Dichlordifluormethan.

Beispiel 2

Beispiel 1 wurde wiederholt, jedoch wurden die 15 g
Kaliumhydroxid durch 15 g Natriumhydroxid ersetzt.

Beispiel 3

Beispiel 1 wurde wiederholt, jedoch wurde anstatt
10 g einer 30 gewichtsprozentigen Lösung eines nichtionischen Tensids die gleiche Menge einer 30 gewichtsprozentigen Lösung von Lauryltrimethylammoniumchlorid
in Wasser verwendet.

Beispiel 4

Beispiel 1 wurde wiederholt, jedoch wurden als Tenside
verwendet:

5 g einer 30 gewichtsprozentigen Lösung  von Oleyl-
    Cetylalkohol 2 mol Ethylenoxid und 5 g einer
    30 gewichtsprozentigen Lösung von Oleyl-Cetyl-
    alkohol 5 mol Ethylenoxid.

...

Beispiel 5

Die Aerosoldosen wurden mit einer breiten Schlitzdüse versehen. Es wurde sodann eine senkrecht stehende lackierte Holzfläche gleichmäßig in einer Dicke von etwa 1 cm beschichtet. Der Schaum war fein porig (rasierschaumartige Konsistenz), ließ sich zielgenau auftragen, rutschte nicht ab und war selbst in einem geheizten Raum geringer Luftfeuchtigkeit mehr als 2 Stunden stabil. Bereits 45 Minuten nach dem Auftragen konnte die verseifbare Lackschicht mit Hilfe eines Spachtels entfernt werden.

Zum Abbeizen einer großen Fläche wurde in einem Tank eine Lösung hergestellt aus

15 kg Kaliumhydroxid

5 kg einer 30 gewichtsprozentigen Lösung eines Anlagerungsproduktes von Oleyl-Cetylalkohol und 2 mol Ethylenoxid

5 kg einer 30 gewichtsprozentigen Lösung eines Anlagerungsproduktes von 5 mol Ethylenoxid an Oleyl-Cetylalkohol sowie

65 kg Wasser.

In einen zweiten Tank wurden unter Druck 10 kg Dichlordiflourmethan gegeben. Die Komponenten wurden über Dosierpumpen in einen Statikmischer dosiert und sodann über ein Austrittsventil breitflächig aufgetragen.

...

0176018

Henkel KGaA
ZR-FE/Patente

## P a t e n t a n s p r ü c h e

1. Als Schaum applizierbares alkalisches Abbeizmittel auf Basis einer 5 bis 40 gewichtsprozentigen wässrigen Alkali-und/oder Ammoniumhydroxidlösung, dadurch gekennzeichnet, daß es bezogen auf Gesamtzubereitung

1 bis 8 Gewichtsprozent Tenside

O bis 5 Gewichtsprozent Schaumstabilisatoren und/oder Verdickungsmittel

5 bis 30 Gewichtsprozent Treibmittel und gewünschtenfalls 1 bis 10 Gewichtsprozent wassermischbare organische Lösungsmittel enthält.

2. Abbeizmittel nach Anspruch 1, dadurch gekennzeichnet, daß als alkalisierende Komponente Kaliumhydroxid, Natriumhydroxid und/oder Tetraalkylammoniumhydroxide enthalten sind.

3. Abbeizmittel nach Anspruch 1 und 2, dadurch gekennzeichnet, daß als Tenside Aniontenside, Amphotenside und/oder Niotenside in Mengen von 1 bis 6 Gewichtsprozent, vorzugsweise 1,5 bis 3 Gewichtsprozent enthalten sind.

4. Abbeizmittel nach den Ansprüchen 1 bis 3, dadurch gekennzeichnet, daß als Aniontenside Fettalkohol- und/oder Fettalkoholethersulfate oder -phosphate Alkylbenzolsulfonate, Alkylphenolsulfate, Alkylphenol- ethersulfate, Paraffinsulfonate und/oder Dodecyl- diphenyletherdisulfonate enthalten sind.

...

5. Abbeizmittel nach Anspruch 1 bis 3, dadurch gekennzeichnet, daß als Niotenside Fettalkohol- und/oder Alkylphenolethoxylate und/oder Ethylenoxidpropylenoxidblockcopolymerisate enthalten sind.

6. Abbeizmittel nach den Ansprüchen 1 bis 5, dadurch gekennzeichnet, daß als Schaumstabilisatoren capillaraktive Carboxy- oder Sulfobetaine, nichtionische Tenside vom Alkylolamidtyp, Fettalkohole und/oder höhere endständige Diole vorhanden sind und daß deren Menge vorzugsweise 1 bis 3 Gewichtsprozent beträgt.

7. Abbeizmittel nach den Ansprüchen 1 bis 6, dadurch gekennzeichnet, daß als Verdickungsmittel Wassergläser, Polymere der Acryl- und/oder Methacrylsäure und/oder Polysaccharide, insbesondere Xanthan, Guar oder Celluloseether, insbesondere Carboxymethylcellulose vorhanden ist.

8. Abbeizmittel nach den Ansprüchen 1 bis 7, dadurch gekennzeichnet, daß als Treibmittel niedrig siedende organische Lösungsmittel, insbesondere Fluorkohlenwasserstoffe, wie Difluordichlormethan, Ether, wie Dimethylether und/oder Alkane, wie Butan oder Pentan vorhanden sind.

9. Abbeizmittel nach den Ansprüchen 1 bis 8, dadurch gekennzeichnet, daß als wassermischbares organisches Lösungsmittel monofunktionelle Alkohole mit bis

...

zu 6 C-Atomen, difunktionelle Alkohole mit bis zu
4 C-Atomen und/oder deren Monoalkylether mit bis
zu 10 C-Atomen eingesetzt werden.


10. Verfahren zur Herstellung eines Abbeizschaumes nach den Ansprüchen 1 bis 9, dadurch gekennzeichnet, daß man zu der Tensid und gewünschtenfalls Schaumstabilisator und/oder Verdickungsmittel enthaltenden Alkalimetall und/oder Ammoniumhydroxidlösung in einem Druckgefäß vorzugsweise einer Aerosoldose Treibmittel zusetzt, wobei sich im Inneren des Gefässes der Eigendruck des Treibmittels aufbaut und sodann die Zubereitung unter Aufschäumen über ein Ventil entnimmt.

**0176018**
Nummer der Anmeldung

Europäisches
Patentamt

**EUROPÄISCHER RECHERCHENBERICHT**

EP 85 11 1680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-A-2 436 488 (METALLGESELLSCHAFT AG) * Anspruch 1; Seite 3, Absatz 3 * | 1-6,8,9 | C 09 D 9/00 |
| Y | US-A-4 085 059 (O.D. SMITH) * Anspruch; Spalte 4, Zeilen 5-20 * | 1-6,8,9 | |
| A | EP-A-0 019 347 (STRIPPERS PAINT REMOVAL SERVICES LTD.) * Ansprüche 1,5 * | 1,2,7 | |
| A | US-A-3 131 153 (K. KLAUSNER) * Spalte 2, Zeilen 12,49-66 * | 1,3-5 | |
| A,D | DE-A-3 104 546 (STERWIN AG) * Ansprüche 5,11 * | 2,7 | RECHERCHIERTE SACHGEBIETE (Int Cl 4) |
| | | | C 09 D 9/00<br>C 09 D 9/04<br>C 09 K 13/00<br>C 09 K 13/02 |

Der vorliegende Recherchenbericht wurde für alle Patentansprüche erstellt

| Recherchenort | Abschlußdatum der Recherche | Prüfer |
|---|---|---|
| DEN HAAG | 05-12-1985 | DE WAHA,R.F.C. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82